(19) **Europäisches Patentamt**

**European Patent Office**

**Office européen des brevets**

(11) **EP 0 728 415 B1**

(12) **EUROPEAN PATENT SPECIFICATION**

(45) Date of publication and mention
of the grant of the patent:
**12.07.2000 Bulletin 2000/28**

(51) Int Cl.[7]: **A21D 2/16**, A21D 13/00,
A21D 13/08, A21D 10/00

(21) Application number: **96200367.9**

(22) Date of filing: **15.02.1996**

(54) **Heat set, flour based products**

Hitzefixierte Produkte auf Mehlbasis

Produits à base de farine fixés par chaud

(84) Designated Contracting States:
**AT BE CH DE DK ES FR GB GR IE IT LI NL PT SE**

(30) Priority: **22.02.1995 EP 95200428**

(43) Date of publication of application:
**28.08.1996 Bulletin 1996/35**

(73) Proprietor: **LODERS CROKLAAN B.V.**
**1521 AX Wormerveer (NL)**

(72) Inventors:
• **Duurland, Franciscus W.J.**
**3632 AL Loenen a/d Vecht (NL)**

• **Klaassen, Maarten J.**
**1531 AM Wormer (NL)**

(74) Representative: **Sikken, Antonius H. J. M. et al**
**UNILEVER N.V.,**
**Patent Division,**
**P.O. Box 137**
**3130 AC Vlaardingen (NL)**

(56) References cited:
**EP-A- 0 555 917         WO-A-94/16572**
**WO-A-94/19953**

**Description**

Heat set, flour based products, such as cakes, puff-pastries, croissants, buns, rolls, bread, pan-cakes, etc. are well known. In order to improve the appearance and the taste of these products, these products often are provided with a layer, based on fat, either at the outside as a complete or partial coating or decorating layer, or at the inside as a filling or as a layer that separates two or more layers of the heat set, flour based products, or both simultaneously. So far coating layers were often based on chocolate compositions, meaning that either cocoa butter or a cocoa butter equivalent were present as the fat component. Alternatively products from the prior art are based on soft bakery fats, such as biscuitine ®, which fats contain hardened vegetable oils, such as palm oil, rapeseed oil or soybean oil, in general mixed with liquid oils or lauric fats, such as coconut oil.

The layer that is used as a filling or as a layer between two layers of the heat set products, are often based on dairy fats or on lauric fats.

Although the use of these fats often results in products with acceptable appearance and mouthfeel, we now found products with an appearance and mouthfeel that are superior over above prior art products. These improvements are due to a new and better consistency of the coating or decorating layers, which results from the steep N-line of the fats applied. Our new products therefore display a firmer initial bite, while thereafter they melt quickly with a cooling effect. No waxy or fatty after taste or mouthfeel is observed.

The fat that we apply for the preparation of the products according to the invention is a fat that is disclosed in our prepublished EP 555 917.

However according to the specification of above document the fat is applied for the preparation of cool-melting, non-trans, non temper filling fats for confectionery products. Nothing is disclosed about the application of these fats in heat set, flour based products, let it be about the unexpected improvement that is obtained by its use.

Therefore our invention concerns the use of these fats in decorating layers or in coating layers of heat set, flour based products.

With heat set, flour based products are meant products made from a batter or a dough, in general after moulding of the batter or dough, wherein the main component of the batter or dough is a flour.

The heat setting can be achieved by a heat-treatment, in particular during the development of steam in the products, by baking, frying, boiling or any other method known in the bakery or in the culinary art.

So our invention concerns heat-set-flour-based products, provided with at least one layer of material, containing a fat, wherein the fat is a cool melting, non-trans, non-temper confectionery fat having:

35-80 wt% of SUS-triglycerides
< 5 wt% of $S_3^1$ -triglycerides
7-60 wt% of $(U_2S + U_3)$-triglycerides
<40 wt% of SSU-triglycerides

$$\frac{SUS}{SSU} \text{ - weight ratio} < 6$$

S = saturated fatty acid having 16-18 C-atoms

$S^1$ = saturated fatty acid having 10-24 C-atoms

U = unsaturated fatty acid having 16-22 C-atoms

In above fat component the SUS level preferably is 51-80 wt%, most preferably 55-70 wt%.

Although the fat can be derived from different vegetable sources, we prefer to apply a fat, derived from palm, in particular from palm oil.

In the fats that we prefer at most at least 35 wt%, in particular at least 45 wt% of $C_{16:0}$ and less than 8 wt%, preferably less than 6.5 wt% of $C_{18:0}$ are present.

The best fats display a solid fat index, measured by NMR-pulse on non-stabilised fat of more than 20, in particular more than 40 at 20°C.

As heat set, flour based products can be used, heat set, moulded products, obtained from doughs or batters, having a composition of: flour, and on flour

0-100 wt% of a fat
0-180 wt% of a sugar
0-100 wt% of egg
0-400 wt% of milk product
0-200 wt% of water
0- 10 wt% of yeast or chemical leavener
0- 50 wt% of flavours and/or colorants

with the prerequisite that at least one of the components other than flour is present.

Specific examples of heat set products are heat set cake batters, heat set sponge batters, heat set bread or bun doughs, heat set puff pastry doughs, heat set moulded batters, heat set muffin batters, heat set doughnuts, etc. Each of above products have their own typical dough or batter composition. Heat set cake batter will contain: flour, and on flour

50- 90 wt% of fat
50-150 wt% of a sugar
50-100 wt% of egg
5- 40 wt% of milk

In heat set sponge batters the batter will contain:

flour, and on flour
1- 20 wt% of an oil
50-150 wt% of a sugar
50-100 wt% of egg

For heat set bread or bun doughs the dough will contain:

flour, and on flour:
1 -20 wt% of sugar
0.5-10 wt% of egg
0.5-10 wt% of leavener
40 -70 wt% of water

Heat set puff pastries are obtained after moulding and laminating a puff pastry dough with the composition: flour, and on flour

50-100 wt% of fat
30- 60 wt% of water

Even moulded batters, made from a batter containing flour and on flour: 5-150 wt% of milk product and 10-60 wt% of egg, can be used for the preparation of the heat set products.

The layer of material, which forms the coating or decoration layer containing the fat, can be a blend, comprising the fat, a sugar and one or more emulsifiers. As sugar any sugar, such as glucose, fructose, sucrose, maltodextrin, etc. could be applied.

As emulsifier any emulsifier known as useful in heat set, flour based products can be used. Examples thereof are: monoglycerides, in particular having high levels of saturated monoglycerides (Iodine value less than 10); DATA-esters (diacetyl tartaric esters of fatty acid), lecithin etc.

In above mixes for the layer, containing the fat, the fat can be present in amounts of 20-60 wt% and the sugar can be present in amounts of 20-80 wt%. The remaining part can consist of e.g. milk powder or cocoa mass.

The products that are part of the invention can be provided with a layer of material, containing the fat, which layer can be present as a layer fully or partially coating the outside of the product. However it is also possible to make products, wherein one or more layers of material, containing the fat are present either as coating-layer or as an intermediate layer between at least two parts of the heat-set products or as a combination thereof.

The composition, used for the preparation of the coating or decorating layer, containing the fat can also contain ingredients, like cocoa mass and/or milk powder (both full milk and skimmed milk). The presence of these components will give our layer the appearance of a chocolate- or a chocolate like layer.

The improvement in appearance and mouthfeel, which is observed in our products, is the most pronounced, when we apply our fats in fat continuous system for our coating or decorating layers.

EXAMPLES

1. Preparation of fat containing composition

The following recipe was applied:

- fat blend 45.5 wt%
- dextrose 18.2 wt%
- icing sugar 36.3 wt%
- lecithin 0.5 wt%
- flavour trace

Total fat content: 45.5 wt%
As fat blend a fat was used, having 2.2% $S_3$; 67.7% SUS; 13.7% SSU; 17.9% ($U_2S + U_3$); SUS : SSU = 4.9; $C_{16:0}$ = 51.1 and $C_{18:0}$ = 6.1.
The composition was made by mixing of the components in a Hobart mixer at 30°C.

2. Preparation of a cake

A cake batter was prepared in the conventional way from 1000 g. flour, 800 g. fat, 1000 g. sugar, 800 g. egg and 200 ml. milk.
The batter was transferred to a cake mould and baked for 45-60 min. at 180°C.
After cooling of the baked cake, the cake was provided with a decorating layer, made from the mix of example 1 by piping this mix on the top of the cake at 30°C.

3. Preparation of a Berliner bol

A batter for a Berliner bol was prepared from: 1000 g. patent flour, 50 g. sugar, 100 g. egg, 100 g. yeast, 20 g. salt; 50 g. full milk powder; 150 g. butter and 480 g. water.
The batter was made in a Hobart mixer. The batter was fermented for about 45 min. at 30°C.
50 g. of the batter was moulded in the shape of a ball and fried in a frying oil at 200°C until ready.
After cooling to ambient temperature the bol obtained was filled with the mix of example 1 at 30°C.

4. Preparation of other fat-containing compositions

4.1 The following recipes were applied:

|  | I | II | III | IV |
|---|---|---|---|---|
| Fatblend | 33 | 21.7 | 40 | 13 |
| Sugar | 48 | - | 45 | 60 |
| Dextrose | 12 | - | - | - |
| Skim milk powd. | 7 | - | - | - |
| Lecithin | 0.4 | - | 0.4 | - |
| Fondant | - | 78.3 | - | - |
| Monoglyceride | - | 1 | - | - |
| Full cream milk powd. | - | - | 15 | - |
| Butter (18% $H_2O$) | - | - | - | 27 |

In recipes I and II the fat had the following triglyceride composition: 65.3 wt %SUS; 2.0 % $S_3$; 20.5 % ($U_2S + U_3$); 12.3 % SSU; (weight-ratio SUS : SSU = 5.3).
In recipe III the fat had the following triglyceride composition: 58.0 wt % SUS; 1.7 % $S_3$; 29.6 % ($U_2S + U_3$); 10.7 % SSU; (weight-ratio SUS : SSU = 5.4).

In recipe IV the fat had the following triglyceride composition: 70.1 wt % SUS; 2.2 % $S_3$; 14.4 % $(U_2S + U_3)$; 13.3 wt % SSU; (weight-ratio: SUS : SSU = 5.3).

In comparative compositions the fat in recipes III and IV was replaced by a prior art fat with: 26.7 wt % saturated fatty acids: 45.8 wt % mono-unsaturated fatty acids and 27.5 wt % trans-fatty acids.

4.2 Cakes were made according to example 2. Some of these cakes were coated with a layer of compositions I or II by dipping of the cake into the liquified compositions I or II. The layer thickness of the coating was about 1 mm. The coated cakes displayed excellent properties, such as texture, cool melting, flavour release, cutability, adherence of coating to cake.

4.3 A number of other cakes were cut into two equal pieces. Compositions III or IV were mixed and aerated (overrun about 40 %). The cake-layers were provided with a layer of the aerated-compositions (layer thickness about 5 mm), while each cake-layer / aerated layer-composite was provided with another cake-layer on top of the aerated layer. The cakes so obtained displayed excellent properties, which were far better than when applying the comparative compositions. In particular texture, coolmelting and flavour release properties were improved.

4.4 A number of the cakes obtained according to 4.3 above were dipped in a liquified composition according to recipes I or II (layerthickness about 2 mm). The resulting products according to the invention displayed unique properties, in particular with respect to texture, coolmelting, flavour release, cutability and adherence to cake.

## Claims

1. Heat-set-flour-based products, provided with at least one layer of material, containing a fat, wherein the fat is a cool melting, non-trans, non-temper confectionery fat having:

   35-80 wt% of SUS-triglycerides
   < 5 wt% of $S_3^1$ -triglycerides
   7-60 wt% of $(U_2S + U_3)$-triglycerides
   <40 wt% of SSU-triglycerides

$$\frac{SUS}{SSU} \text{ - weight ratio} < 6$$

$$S = \text{saturated fatty acid having 16-18 C-atoms}$$

$$S^1 = \text{saturated fatty acid having 10-24 C-atoms}$$

$$U = \text{unsaturated fatty acid having 16-22 C-atoms}$$

2. Products, according to Claim 1, wherein the fat has a SUS-content of 51-80 wt%, preferably 55-70 wt%.

3. Products, according to Claim 2, wherein the SUS component is derived from palm fat.

4. Products, according to Claims 1 - 3, wherein the fat contains at least 35 wt%, preferably at least 45 wt% of $C_{16:0}$ and less than 8 wt%, preferably less than 6.5 wt% of $C_{18:0}$.

5. Products, according to Claims 1 - 4, wherein the fat displays an $N_{20}$ (non-stab.) > 20, preferably > 40.

6. Products, according to Claims 1 - 5, wherein the heat-set, flour based products are heat-set, moulded products obtained from doughs or batters, having a composition of: flour, and on flour

   0-100 wt% of a fat
   0-180 wt% of a sugar
   0-100 wt% of egg

0-400 wt% of milk product
0-200 wt% of water
0- 10 wt% of yeast or chemical leavener
0- 50 wt% of flavours and/or colorants

with the prerequisite that at least one of the components other than flour is present.

7. Products, according to Claim 6, wherein the heat-set flour based products are heat-set cake batters, containing:

flour, and on flour
50- 90 wt% of fat
50-150 wt% of a sugar
50-100 wt% of egg
5- 40 wt% of milk

8. Products, according to Claim 7, wherein the heat-set, flour based products are heat-set sponge batters, containing:

flour, and on flour
1- 20 wt% of an oil
50-150 wt% of a sugar
50-100 wt% of egg

9. Products, according to Claim 7, wherein the heat-set, flour based products are heat set bread doughs, containing:

flour, and on flour:
1 -20 wt% of sugar
0.5-10 wt% of egg
0.5-10 wt% of leavener
40 -70 wt% of water

10. Products, according to Claim 7, wherein the heat-set flour based products are heat-set puff-pastry doughs, containing:

flour, and on flour
50-100 wt% of fat
30- 60 wt% of water

11. Products, according to Claim 7, wherein the heat-set, flour based products are heat-set moulded batters, containing:

flour, and on flour
5-150 wt% of milk-product
10- 60 wt% of egg

12. Products, according to Claims 1 - 11, wherein the layer of material, containing the fat is a blend comprising the fat, sugar and emulsifier(s).

13. Products, according to Claim 12, wherein the layer of material, containing the fat, has a fat content of 20-60 wt% and a sugar-content of 20-80 wt%.

14. Products, according to Claims 1 - 13, wherein the layer of material, containing the fat is present as a layer fully or partially coating the outside of the product.

15. Products, according to Claims 1 - 13, wherein one or more layers of material, containing the fat are present either as coating-layer or as an intermediate layer between at least two parts of the heat-set products or as a combination thereof.

16. Products, according to Claims 1 - 13, wherein the layer of material, containing the fat is a chocolate or chocolate-like layer.

17. Products, according to Claims 1 - 13, wherein the layer of material, containing the fat is a layer of a fat-emulsion, preferably being a fat-continuous fat-emulsion.

18. Products, according to Claims 1 - 13, wherein the layer(s) of material, containing the fat is (are) present as continuous or discontinuous decorating layer(s).

**Patentansprüche**

1. Heißfixierte Produkte auf Mehlbasis, die mit mindestens einer Schicht aus einem Material, das ein Fett enthält, versehen sind, wobei das Fett ein kühlschmelzendes, nicht zu temperierendes Nicht-trans-Backfett ist, das

   35-80 Gew.-% SUS-Triglyceride,
   <5 Gew.-% $S_3^1$-Triglyceride,
   7-60 Gew.-% $(U_2S + U_3)$-Triglyceride,
   <40 Gew.-% SSU-Triglyceride enthält, wobei das

$$\frac{SUS}{SSU}\text{-Gewichtsverhältnis} <6,$$

   S = eine gesättigte Fettsäure mit 16 bis 18 C-Atomen,

   $S^1$ = eine gesättigte Fettsäure mit 10 bis 24 C-Atomen,

   U = eine ungesättigte Fettsäure mit 16 bis 22 C-Atomen

   bedeutet.

2. Produkt gemäß Anspruch 1, in denen das Fett einen SUS-Gehalt von 51 bis 80 Gew.-%, vorzugsweise von 55 bis 70 Gew.-% hat.

3. Produkt gemäß Anspruch 2, in denen die SUS-Komponente von Palmfett stammt.

4. Produkt gemäß den Ansprüchen 1 bis 3, in denen das Fett mindestens 35 Gew.-%, vorzugsweise mindestens 45 Gew.-% $C_{16:0}$ und weniger als 8 Gew.-%, vorzugsweise weniger als 6,5 Gew.-% $C_{18:0}$ enthält.

5. Produkte gemäß den Ansprüchen 1 bis 4, in denen das Fett einen $N_{20}$ (nicht-stab.) >20, vorzugsweise >40 zeigt.

6. Produkte gemäß den Ansprüchen 1 bis 5, in denen die heißfixierten Produkte auf Mehlbasis heißfixierte geformte Produkt sind, die aus Teigen oder Schlagteigen erhalten werden, die folgende Zusammensetzungen haben:

   Mehl, und bezogen auf Mehl:
   0-100 Gew.-% eines Fettes,
   0-180 Gew.-% eines Zuckers,
   0-100 Gew.-% Eier,
   0-400 Gew.-% Milchprodukt,
   0-200 Gew.-% Wasser,
   0-10 Gew.-% Hefe oder chemisches Treibmittel,
   0-50 Gew.-% Aromastoffe und/oder Farbstoffe,

   unter der Voraussetzung, daß außer Mehl mindestens eine der anderen Komponenten vorhanden ist.

7. Produkte gemäß Anspruch 6, in denen die heißfixierten Produkte auf Mehlbasis heißfixierte Kuchen-Schlagteige (geschlagene dünne Eierteige für Kuchen) sind, die Mehl und, bezogen auf Mehl:

    50-90 Gew.-% Fett,
    50-150 Gew.-% eines Zuckers,
    50-100 Gew.-% Eier,
    5-40 Gew.-% Milch

enthalten.

**8.** Produkte gemäß Anspruch 7, in denen die heißfixierten Produkte auf Mehlbasis heißfixierte aufgegangene Schlagteige sind, die

    Mehl, und bezogen auf Mehl:
    1-20 Gew.-% eines Öls,
    50-150 Gew.-% eines Zuckers,
    50-100 Gew.-% Eier,

enthalten.

**9.** Produkte gemäß Anspruch 7, in denen die heißfixierten Produkte auf Mehlbasis heißfixierte Brotteige sind, die Mehl, und bezogen auf Mehl:

    1-20 Gew.-% Zucker,
    0,5-10 Gew.-% Eier,
    0,5-10 Gew.-% Treibmittel,
    40-70 Gew.-% Wasser,

enthalten.

**10.** Produkte gemäß Anspruch 7, in denen die heißfixierten Produkte heißfixierte Blätterteige sind, die

    Mehl, und bezogen auf Mehl:
    50-100 Gew.-Teile Fett
    30-60 Gew.-% Wasser

enthalten.

**11.** Produkte gemäß Anspruch 7, in denen die heißfixierten Produkte heißfixierte geformte Schlagteige sind, die Mehl, und bezogen auf Mehl:

    5-150 Gew.-% Milchprodukt
    10-60 Gew.-% Eier

enthalten.

**12.** Produkte gemäß den Ansprüchen 1 bis 11, in denen die Schicht aus einem Material, das das Fett enthält, eine Mischung ist, die das Fett, Zucker und Emulgator(en) umfaßt.

**13.** Produkte gemäß Anspruch 12, in denen die Schicht aus einem Material, das das Fett enthält, einen Fettgehalt von 20 bis 60 Gew.-% und einen Zuckergehalt von 20 bis 80 Gew.-% hat.

**14.** Produkte gemäß den Ansprüchen 1 bis 13, in denen die Schicht aus einem Material, das das Fett enthält, als Schicht, die die Außenseite des Produktes ganz oder teilweise überzieht, vorliegt.

**15.** Produkte gemäß den Ansprüchen 1 bis 13, in denen eine oder mehrere Schichten aus einem Material, das das Fett enthält, entweder als Überzugsschicht oder als Zwischenschicht zwischen mindestens zwei Teilen der heißfixierten Produkte oder als Kombination davon vorliegt (vorliegen).

**16.** Produkte gemäß den Ansprüchen 1 bis 13, in denen die Schicht aus einem Material, das das Fett enthält, eine Schokoladen- oder schokoladenartige Schicht ist.

**17.** Produkte gemäß den Ansprüchen 1 bis 13, in denen die Schicht aus einem Material, das das Fett enthält, eine Schicht aus einer Fettemulsion ist, die vorzugsweise eine Fettemulsion mit zusammenhängender Fettphase ist.

**18.** Produkte gemäß den Ansprüchen 1 bis 13, in denen die Schicht(en) aus einem Material, das das Fett enthält, als zusammenhängende oder unterbrochene Dekorschicht(en) vorliegen.

## Revendications

**1.** Produits à base de farine fixés à chaud munis d'au moins une couche de matériau contenant une matière grasse, dans lesquels la matière grasse est une matière grasse de confiserie fondant à froid, non trans et non altérable comprenant :

35 - 80 % en masse de triglycérides SUS
< 5 % en masse de triglycérides $S^1_3$
7 - 60 % en masse de triglycérides ($U_2S + U_3$)
< 40 % en masse de triglycérides SSU

un rapport en masse SUS/SSU < 6

S = acide gras saturé ayant de 16 à 18 atomes de carbone
$S^1$ = acide gras saturé ayant de 10 à 24 atomes de carbone
U = acide gras insaturé ayant de 16 à 22 atomes de carbone

**2.** Produits, selon la Revendication 1, dans lesquels la matière grasse a une teneur en SUS de 51 - 80 % en masse, de préférence de 55 - 70 % en masse.

**3.** Produits selon la Revendication 2, dans lesquels le composant SUS est dérivé d'huile de palme.

**4.** Produits selon les Revendications 1 - 3, dans lesquels la matière grasse contient au moins 35 % en masse, de préférence au moins 45 % en masse de $C_{16:0}$ et moins de 8 % en masse, de préférence moins de 6,5 % en masse de $C_{18:0}$.

**5.** Produits selon les Revendications 1 - 4, dans lesquels la matière grasse a une valeur $N_{20}$ (non stabilisée) > à 20, de préférence > à 40.

**6.** Produits selon les Revendications 1 - 5, dans lesquels les produits à base de farine fixés à chaud sont des produits moulés fixés à chaud obtenus à partir de pâtes ou de pâtes à frire, étant composées de farine, et sur la base de la farine :

0 - 100 % en masse d'une matière grasse
0 - 180 % en masse d'un sucre
0 - 100 % en masse d'oeuf
0 - 400 % en masse d'un produit laitier
0 - 200 % en masse d'eau
0 - 10 % en masse de levure ou d'un agent levant chimique
0 - 50 % en masse d'agents de sapidité et/ou de colorants

à la condition qu'au moins l'un des composants autres que la farine soit présent.

**7.** Produits selon la Revendication 6, dans lesquels les produits à base de farine fixés à chaud sont des pâtes à frire pour gâteaux fixées à chaud contenant de la farine, et sur la base de la farine :

50 - 90 % en masse de matière grasse
50 - 150 % en masse d'un sucre

50 - 100 % en masse d'oeuf

5 - 40 % en masse de lait

8. Produits selon la Revendication 7, dans lesquels les produits à base de farine fixés à chaud sont des pâtes à frire pour gâteaux de Savoie fixées à chaud, contenant de la farine, et sur la base de la farine :

1 - 20 % en masse d'une huile

50 - 150 % d'un sucre

50 - 100 % en masse d'oeuf

9. Produits selon la Revendication 7, dans lesquels les produits à base de farine fixés à chaud sont des pâtes à pain contenant de la farine et, sur la base de la farine :

1 - 20 % en masse de sucre

0,5 - 10 % en masse d'oeuf

0,5 - 10 % en masse de produit levant

40 - 70 % en masse d'eau

10. Produits selon la Revendication 7, dans lesquels les produits à base de farine fixés à chaud sont des pâtes feuilletées fixées à chaud contenant de la farine, et sur la base de la farine :

50 - 100 % en masse de matière grasse

30 - 60 % en masse d'eau

11. Produits selon la Revendication 7, dans lesquels les produits à base de farine fixés à chaud sont des pâtes à frire moulées fixées à chaud contenant de la farine, et sur la base de la farine :

5 - 150 % en masse de produit laitier

10 - 60 % en masse d'oeuf

12. Produits selon les Revendications 1 - 11, dans lesquels la couche de matériau contenant la matière grasse est un mélange comprenant la matière grasse, du sucre et un (des) émulsifiant(s).

13. Produits selon la Revendication 12, dans lesquels la couche de matériau contenant la matière grasse a une teneur en matière grasse de 20 - 60 % en masse et une teneur en sucre de 20 - 80 % en masse.

14. Produits selon les Revendications 11 - 13, dans lesquels la couche de matériau contenant la matière grasse est présente sous la forme d'une couche enrobant totalement ou partiellement l'extérieur du produit.

15. Produits selon les Revendications 11 - 13, dans lesquels une ou plusieurs couches du matériau contenant la matière grasse sont présentes soit sous la forme d'une couche de revêtement, soit sous la forme d'une couche intermédiaire placée entre au moins deux couche des produits fixés à chaud, soit sous la forme d'une combinaison de ces deux alternatives.

16. Produits selon les Revendications 1 -13, dans lesquels la couche de matériau contenant la matière grasse est une couche de chocolat ou semblable à du chocolat.

17. Produits selon les Revendications 1 - 13, dans lesquels les couches de matériaux contenant la matière grasse est une couche d'une émulsion de matière grasse, qui est de préférence une émulsion de matière grasse continue.

18. Produits selon les Revendications 1 - 13, dans lesquels la (les) couche(s) de matériau contenant la matière grasse est (sont) présente(s) sous la forme d'une (de) couches) de décoration continue(s) ou discontinue(s).